Europäisches Patentamt

(19) European Patent Office

Office européen des brevets

(11) Publication number: **0 060 952**
**B1**

(12) **EUROPEAN PATENT SPECIFICATION**

(45) Date of publication of patent specification: **27.01.88**

(21) Application number: **81305176.0**

(22) Date of filing: **30.10.81**

(51) Int. Cl.⁴: **G 01 N 29/04**

(54) Ultrasonic inspection and deployment apparatus.

(30) Priority: **19.03.81 US 245426**

(43) Date of publication of application:
**29.09.82 Bulletin 82/39**

(45) Publication of the grant of the patent:
**27.01.88 Bulletin 88/04**

(84) Designated Contracting States:
**BE CH DE FR GB IT LI SE**

(56) References cited:
**FR-A-2 101 179**
**FR-A-2 182 553**
**FR-A-2 394 152**
**GB-A-2 053 474**
**US-A-3 921 440**
**US-A-3 978 714**
**US-A-4 254 660**

(73) Proprietor: **WESTINGHOUSE ELECTRIC CORPORATION**
**Westinghouse Building Gateway Center**
**Pittsburgh Pennsylvania 15222 (US)**

(72) Inventor: **Michaels, Jennifer Emmons**
**418 Eddy Street Apartment 5**
**Ithaca New York (US)**
Inventor: **Stephen, John Mech, Jr.**
**2320 Road 76**
**Pasco Washington (US)**
Inventor: **Michaels, Thomas Ellsworth**
**418 Eddy Street Apartment 5**
**Ithaca New York (US)**

(74) Representative: **van Berlyn, Ronald Gilbert**
**23, Centre Heights**
**London, NW3 6JG (GB)**

Courier Press, Leamington Spa, England.

# 0 060 952

**Description**

This invention relates to an ultrasonic inspection apparatus for inspection of specimens and, more particularly, to such apparatus which is adapted for ultrasonic inspection of piping and pipe welds located in high temperature and high radiation environments.

Since defects in metal and welds can lead to overall failure, routine inspections are required in many applications. Non-destructive inspection using ultrasonic waves is now well known art. The general principle teaches that an ultrasonic wave, introduced into a specimen, is reflected on encountering a change in acoustical impedance. Pores, cracks, and other defect types in metal strongly reflect sound waves, creating echoes.

Ultrasonic testing equipment introduces sound waves of frequency above 100,000 cycles per second into the specimen to be inspected and records on an oscilloscope style screen the pulses of echoes resulting. Informed analysis of the patterns on the screen allows identification of echoes which are created by the existence of a specific defect such as voids and material discontinuities. More sophisticated methods allow preparation of a pictorial representation of the specimen interior which also identifies defect locations and size.

Generation of an ultrasonic wave is most often done using a piezoelectric crystal to which an impulse voltage is applied. The crystal vibrates mechanically at its resonant frequency in response to the impulse applied, creating an ultrasonic wave. A piezoelectric crystal, if exposed to a mechanical vibration, will also function in reverse to generate a corresponding electrical voltage. Thus, a piezoelectric crystal may be used as a T-transducer, a transmitter of ultrasonic waves, or as an R-transducer; a receiver of ultrasonic waves. A single transducer; designated a TR transducer, may perform both roles by transmitting an ultrasonic pulse for several microseconds followed by several thousand microseconds sensitivity to incoming sound. A pair of transducers may be operated in association such that one "pitch" transducer transmits ultrasonic waves while the other "catch" transducer receives pitch waves as well as any echoes.

High frequency sound waves propagate poorly in compressible fluids such as air. In the absence of affirmative contact between the transducer and the specimen, an incompressible couplant between the surfaces of these must be used to transmit sound waves therebetween. A film of oil, glycerine, or water or a solid wedge is the usual couplant.

The acoustical velocity in the couplant varies with the temperature of the couplant which may vary between the locations of transducers used to measure acoustical velocity. Such temperature variation would reduce the accuracy of the couplant acoustical velocity measurement.

Ultrasonic inspections characteristically require numerous test positions of the transducer with respect to the specimen in order to completely inspect all specimen areas. Movement of the transducer between test sites is a repetitive task, and generates voluminous data. A high degree of automation is desirable, especially if the specimen is located in a hostile environment.

Liquid metal fast breeder reactors have large installed pipes containing hot liquid sodium in radiation areas. Regulations proposed for breeder reactors may require routine weld inspections on specific pipes, with test failure criterion based on defect characteristics such as size.

While defect size is of interest in anticipating specimen failure, the time rate of growth of defects is of greater importance. The historical establishment of failure criterion based on defect characteristics measureable at a single point in time is considered a result of limitations of then-existing inspection art rather than attention to real failure modes. Since an installed pipe moves over time due to thermal expansion and other reasons, it is extremely difficult to inspect a given pore or crack twice, separated over a time interval of perhaps a year, in order to obtain defect growth data. A specific defect cannot be precisely relocated and data obtained once cannot be repeated. Consequently, current practice which bases failure criterion on defect size, can easily require repair of a defect, requiring expensive plant shutdown, which defect may in reality be unstressed and not propagating. Also, a small, but stressed crack which is actually growing, may be considered safe.

If an inspection apparatus capable of precise, repeatable inspection of specific defects could be developed, new inspection failure criterion could be developed which would be both safer and more economic.

Certain prior art is available in published patent specifications, some of which are as follows:

US Patent 3,978,714 is directed to an ultrasonic detector-head for checking of the surface of an article. A side focussing flaw-detecting ultrasonic transducer applies pulses of ultrasonic oscillations. Reflected ultrasonic oscillations from the article in the form of a beam are sensed by two receiving transducers which produce a differential signal. The apparatus maintains a constant distance between the flaw-detecting ultrasonic transducer and the article surface.

US Patent 4,254,660 teaches an ultrasonic pulse-echo test measuring system wherein the workpiece to be examined or tested is coupled to the testing ultrasonic transducer by a liquid coupling medium. In order to compensate for errors in measurement owing to velocity-changes in the coupling liquid with changes in temperature, a search pulse is transmitted along a normal path over a calibrated fixed distance.

French Patent 2182553 (equivalent US Patent 3857052) teaches an in-service inspection system with previously stored digital signals which are compared with digital signals produced during inspection by

2

**0 060 952**

using a sensor. From the comparison, differential signals are generated which cause a control means to define the affected area of the workpiece.

US Patent 3921440 teaches an ultrasonic inspection system of workpieces for providing volumetric testing of circumferential welds in structural cross sections (eg pipes) of regular shape. A flexible boot which is pressurized with a liquid couplant is provided to cover the transducer to provide ultrasonic coupling between the object and the workpiece.

None of the above prior arrangements has any arrangement to inspect a region of the workpiece simultaneously at two different angles as well as additional transducers as in the present invention.

Precise data repeatability over a time interval, which reveals defect growth, is of obvious importance to inspection of such specimens as aircraft wing supports. Of further importance to applicability to pipes in nuclear power plants is the degree of automation achievable.

Consequently, it is desired to provide a highly automated ultrasonic inspection apparatus, able to accurately repeat data scans, operable in high temperature and radiation environments and especially adapted to inspection of welds on large installed pipes.

It is an object of this invention to provide an apparatus for ultrasonic inspection of a metal specimen combining several features which together make a high degree of data repeatability and automation feasible.

The invention in its broad form comprises an automated ultrasonic inspection apparatus for the inspection of a selected region of a specimen at at least two different angles, the apparatus comprising:

(A) a scanning head with ultrasonic inspection elements, said scanning head including a casing with an opening;

(B) mechanical scanning support means having six degrees of freedom, for supporting, aligning and positioning said scanning head in proximity to the specimen; and

(C) automatic control means for controllably aligning and positioning said scanning head to control a specimen inspection travelling scan of the scanning head and moreover to automatically control the position and alignment of the scanning head to achieve and maintain desirable position and alignment of said scanning head with respect to said specimen characterized by:

(D) ultrasonic couplant supply means for maintaining a supply of a fluid couplant to make contact between the specimen to be inspected and the ultrasonic element whereby said scanning head having fluid communication with said couplant supply means;

(E) the ultrasonic inspection elements also comprising a profiling ultrasonic element for mapping the surface of the specimen and an acoustical velocity measuring ultrasonic element for measuring the velocity of sound in the couplant, the ultrasonic inspection elements for ultrasonic inspection of the selected region having a bellows for forming a couplant filled volume above a surface of the specimen, and having an outlet disposed to direct a stream of couplant to the surface of the specimen forming an acoustic communication path between the specimen and said scanning head thereby accommodating passage of ultrasonic waves therebetween; and

(F) the automatic control means is programmed to control the position and alignment of the scanning head for inspection at least at two different angles in response to data obtained by previous and concurrent profiling scans and to use specimen surface features to identify a computer coordinate system and to use said coordinate system to identify and interpret inspection data, said computer also including programming to continuously interpret data received from specimen inspection scans and profiling scans using concurrently monitored couplant acoustical velocity measurements.

In accordance with a preferred embodiment of the invention, an initial scan or inspection survey of the specimen is obtained, perhaps prior to initial operation. During this scan, a profiling function of the apparatus discovers and stores the position of surface features of the specimen as well as positions of internal defects. Some surface features, such as reference holes or scratches may be deliberately introduced by the operator. The surface features are used by a computer to define a coordinate system. The computer then collects defect data during inspection scans which are repeatable in space defined by the surface-feature-based coordinate system. Consequently, future inspections, even years later, can relocate specific defects even if the entire specimen has shifted location, by computer recognition of the reference surface features.

The apparatus has a mechanical scanner track which permanently or temporarily attaches to a specimen. The mechanism has a sufficient number of axes of motion such that the scanner can be moved over the specimen surface.

A scanning head contains multiple ultrasonic transducer elements in a single housing to perform three functions (1) surface profiling; (2) specimen inspection; and (3) couplant acoustic velocity sensing. A single TR transducer for surface profiling is used to measure the time-of-flight of the sound wave reflected off the specimen surface. Since the velocity of sound in the couplant is also monitored, the distance of the transducer housing to the specimen surface can be calculated and the surface features accurately mapped as position data. This data is stored for future use.

Additionally, the peak amplitude of the surface echo is measured and the entire scanning head tilted as necessary to maximize this echo, thereby ensuring optimum perpendicular alignment, if desired, of the scanning head with the surface. The surface profile information stored in a computer is used to automatically control the scanning head standoff distance during specimen inspection.

3

A pitch-catch transducer pair is used for specimen inspection.

A single TR transducer for velocity sensing is aimed at a reflector integral to the scanning head housing at a constant, known distance from this transducer. Sound from this transducer passes through a fixed length path through the couplant. The time-of-flight of the reflected wave from the reflector is used to calculate the speed of sound in the couplant.

The scanner head is equipped with a pliable bellows which bears against the specimen surface forming an enclosed volume between the specimen surface and the transducers in the scanner head. A uniform laminar flow of couplant is passed through the bellows volume such that acoustical communication between the transducers and the surface is maintained. The couplant itself is an oil chosen to be able to withstand the expected specimen temperature and chemically compatible with the environment.

The couplant containment means has an alternate arrangement described below, but both arrangements avoid a common problem generated by solid wedge type couplants which is the trapping of reflected waves under the wedge. A lack of wave trapping prevents there being a wide frequency range of meaningless noise such that the frequency content of echoes becomes useful data. The scanning device disclosed here utilizes frequency data and mathematical weighting thereof to discover the energy content of an echo using well-known techniques which greatly improve the applicability of the system to large-grained metal specimens often encountered in nuclear-grade piping.

The gathering of multiple transducer elements into a single housing is of significant advantage. Installation of the surface profiling transducer in a common scanning head enables that device to establish perpendicularity between all transducers and the specimen surface, if so desired, and to eliminate reference errors that might result from changing transducers mounted in separate heads.

The apparatus has computerized control of the scanner mechanism allowing preprogrammed and operator initiated control of the scanner. Electronic feedback of information from the surface profiling function is used to adjust scanner head orientation and position during current scan operations.

From the above, it is seen that several features have been incorporated into the design of an ultrasonic inspection apparatus. The apparatus has a surface profiling element, a couplant acoustical velocity sensing element, and a specimen inspection element, all mounted in a common scanning head having a bellows-contained couplant volume. The apparatus has control mechanisms which use computer stored profile information and pattern recognition to automatically position and align the scanner head during specimen inspection. The apparatus control system automatically and repeatedly performs the specimen inspection using profile data. Finally, the apparatus has a scanning mechanism with degrees of motion freedom sufficient to permit coverage of the entire inspection area.

It is the combination of each of the above features together which enables the resulting apparatus to be best utilized for automatic, remote, repeatable inspection of specimens in hostile environments. Essentially all steps needed to position the scanner and acquire meaningful inspection data are automated such that the operator may be remotely located.

The invention will become readily apparent from the following description of exemplary embodiments thereof when read in conjunction with the accompanying drawings, in which:

Figure 1 is a schematic diagram of the complete ultrasonic inspection apparatus;

Figure 2 is a perspective drawing of the scanner track assembly and scanner truck;

Figure 3 is a perspective drawing of the scanner track assembly with support details;

Figure 4 is a drawing of the scanner truck;

Figure 5 is a schematic showing axis of motion of the scanner truck;

Figures 6 through 11 are drawings of components of the scanner truck; each of these drawings relates to a specific axis of motion as indicated in Figure 5;

Figure 12 is a schematic of the three element scanner head;

Figure 13 is a schematic which illustrates a specimen inspection using a 45° ultrasonic wave;

Figure 14 is a schematic which illustrates outer surface profiling;

Figure 15 is a schematic which illustrates inner surface profiling;

Figure 16 is a section of the scaning head showing a bellows seal for forming a couplant volume; and

Figure 17 is a schematic which illustrates an alternate velocity sensing transducer placement.

The following detailed description relates to a first preferred embodiment which is the application of the apparatus to inspection of large diameter cylindrical installed pipe. The inventive concepts are also applicable to a metal specimen of other geometric shapes and sizes with necessary alterations to the mechanical system to accommodate whatever motion is necessary to closely scan an altered specimen geometry.

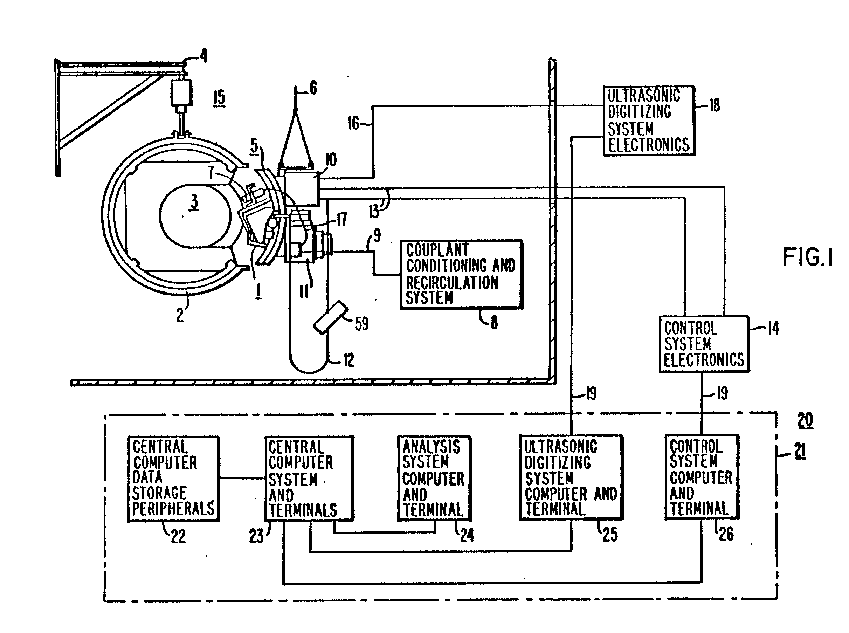

Referring to Figure 1, the overall ultrasonic inspection apparatus has a scanning truck 1 mounted within a circular track 2 which surrounds and is supportively attached to a specimen pipe 3. Track 2 additionally has support means shown in Figure 1 as a bracket 4. Track 2 has a removable section 5 shown in Figure 1 as supported by a hoist 6 just prior to installation of removable section 5. Scanning truck 1 may be parked in the removable section 5 such that scanning truck 1 itself is removable along with removable section 5. Removable section 5 is of sufficient size to allow passage of the track 2 into circumscription around pipe 3.

The couplant supply to scanning head 7 is provided by a couplant conditioning and recirculation system 8 which includes couplant temperature control means. System 8 is supplied with a sufficient reservoir of couplant or alternatively has sumps to gather used couplant for recycle. The couplant is an incompressible fluid, one suitable example being dimethyldiphenyl silicone fluid which is commercially available as GE—SF—1154. Hose 9 in Figure 1 is intended to represent both couplant supply and return lines, while hose 17 represents scanning head 7 supply and return lines.

Removable track section 5 has an electrical junction box 10 attached thereto which remains in a fixed position with respect to track 2. A second junction box 11 is fixed to scanning truck 1 and consequently moves with scanning truck 1 around track 2. This movable junction box 11 supplies electrical and couplant fluid connections to scanning truck 1 and has flexible cable 12 spanning to junction box 10 of sufficient length to fully accommodate the necessary travel.

Scanning truck 1 will be shown hereinbelow to have multiple stepping motors, position encoders, and limit switches which are used to controllably move scanning truck 1 over the pipe 3 surface. Signal cables 13 are shown providing input and output signals to and from these components to a control system electronics unit 14 which is located outside cell 15, considered to be a hostile environment. Coaxial cable 16 transmits signals to and from the ultrasonic transducers in the scanning head 7 to a signal digitizing electronic unit 18 where analog signals from the transducer are amplified and displayed. Cables 19 from these panels 14 and 18 may be grouped together for routing to a remote area 20 out of the hostile environment and perhaps to a mobile vehicle 21. This vehicle 21 is shown to contain a central computer 23 with a data storage peripheral 22, an analysis computer 24, a digitizing computer 25, and a control computer 26. The central computer 23 receives position information from control computer 26 and demands a preprogrammed sweep in time and space by scanner head 7 over the pipe 3 surface. Central computer 23 also receives scan data via digitizing computer 25 for analysis by analysis computer 24. Local control of scanning truck 1 is provided by a manual control pendant 59.

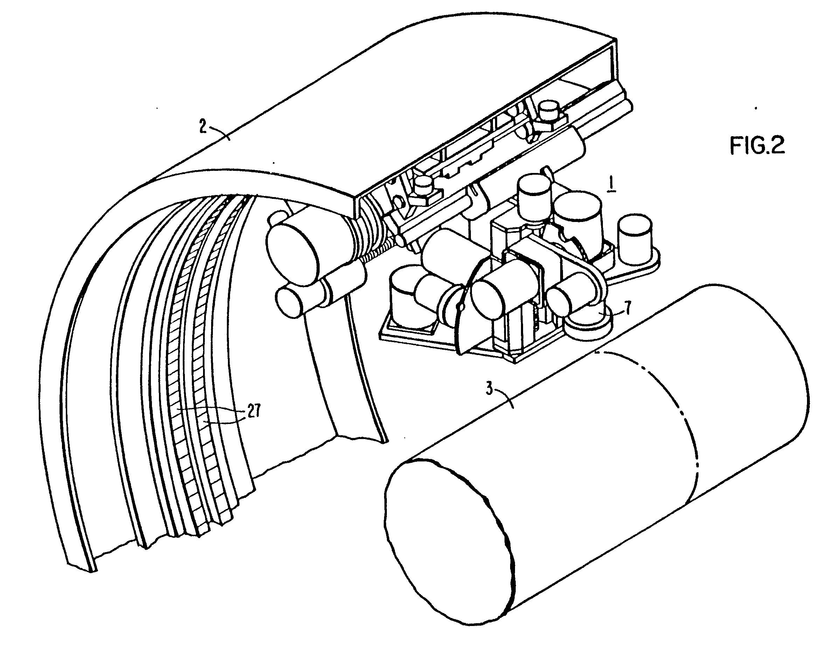

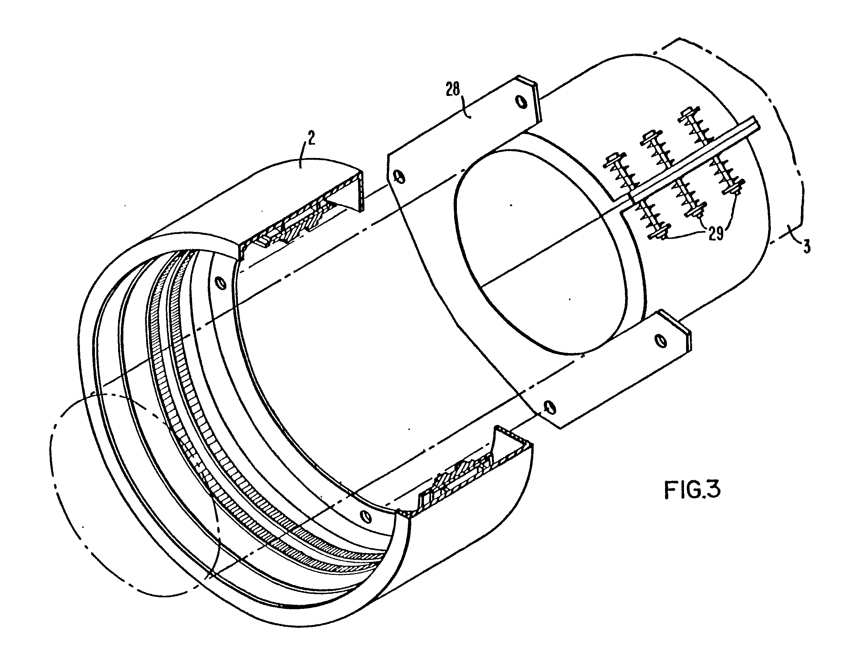

Figure 2 is a section of track 2 showing track internal gears 27 used by scanning truck 1 to move circumferentially around pipe 3. Figure 3 shows details of the method by which track 2 is rigidly supported by and attached to pipe 3. Track 2 is bolted to a track support 28 which is held to pipe 3 by spring-loaded bolts 29.

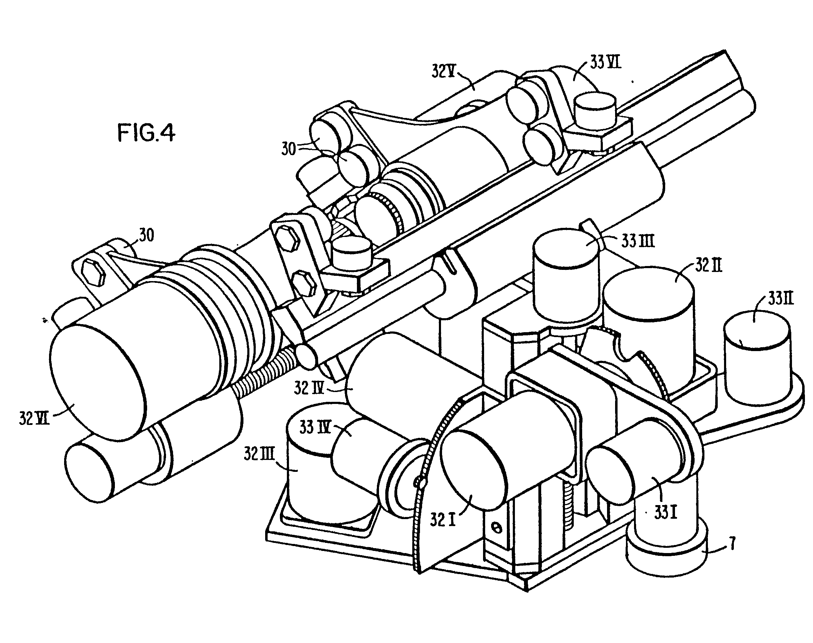

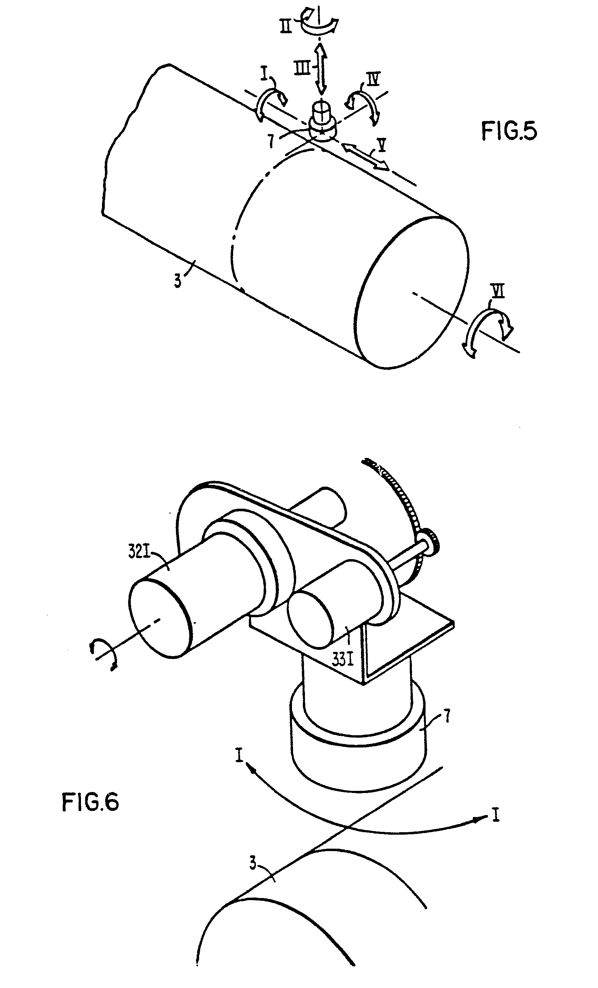

Figure 4 is a view of scanning truck 1. This scanning truck 1 is a frame having six degrees of freedom of motion which enables the computer control system to move scanner head 7 to any desired position over the pipe 3 and to tilt scanner head 7 at an angle to the pipe 3 surface. Figure 4 shows cam rollers 30 which bear on a surface of track 2 and support scanning truck 1. Truck 1 has six groups each comprising a drive motor and a position encoder, associated with each of six degrees of freedom of scanning head 7. In Figure 5, each of these six degrees of freedom, each being an axis or direction of motion of scanning head 7, are illustrated and labelled with a Roman numeral. In Figure 4 and in Figures 6 to 11, the position encoders and drive motors associated with a particular direction or axis of motion is appropriately labelled with a Roman numeral from Figure 5.

In Figures 4 and 6 to 11, all drive motors are labelled 32 and all position encoders are labelled 33.

Table 1 lists the range of travel for each of the six axis or directions of motion in Figure 5 which is considered sufficient for the needs of this specific scanner geometry as applied to a 813 mm (16″) diameter pipe specimen.

TABLE 1

| Axis or direction of motion | Range |
| --- | --- |
| I circular plane rotation | ±5° |
| II radial axis rotation | ±40° |
| III radial travel | 2″ (50.8 mm) |
| IV axial plane rotation | ±30° |
| V axial | 8″ (203.2 mm) or ±4″ (±101.6 mm) from weld |

Figure 6 is a schematic of components of scanning truck 1 which are used to achieve the circular plane rotation of scanning head 7, such motion identified as I in Figures 5 and 6.

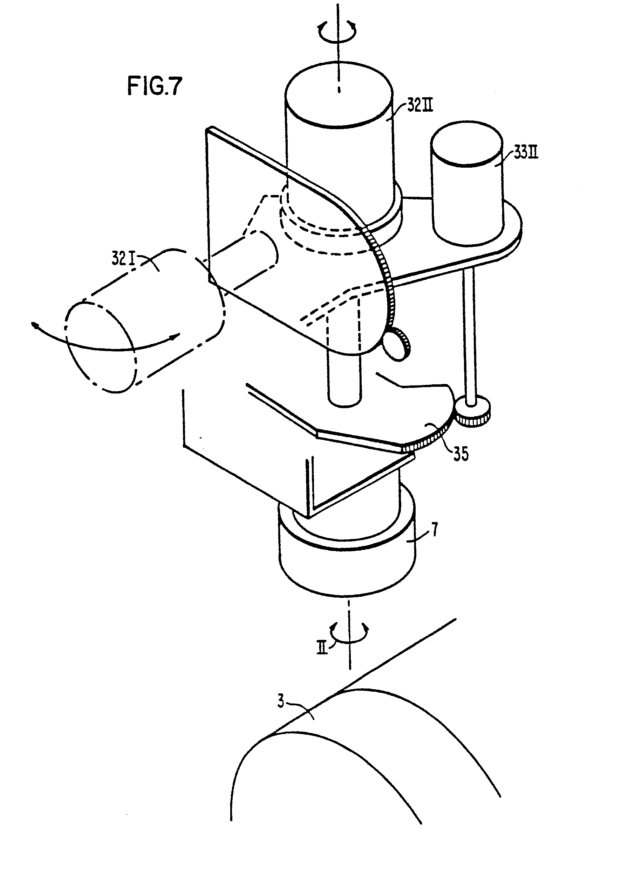

Figure 7 is a schematic of components of scanning truck 1 which are used to achieve radial plane rotation of scanning head 7, such motion identified as I in Figures 5 and 7.

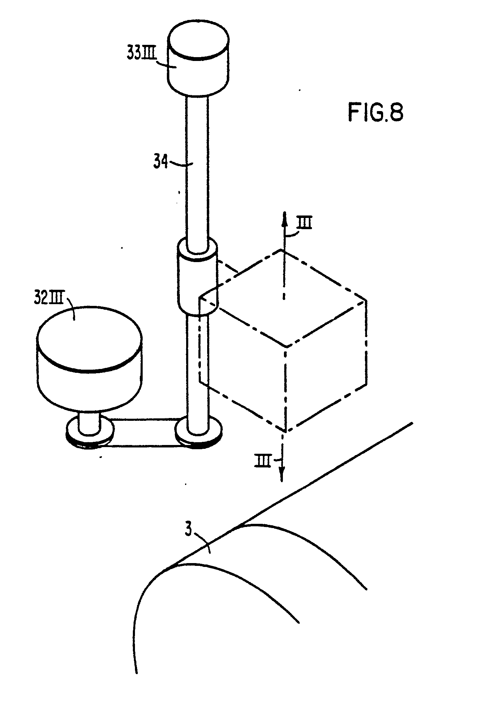

Figure 8 is a schematic of components of scanning truck 1 which are used to achieve radial travel (parallel to the pipe radius) of scanning head 7, such motion identified as III in Figures 5 and 8. It is to be noted that lead screw 34 in Figure 8 operates via a chain or belt drive from the drive motor (a stepping motor of 200 steps/revolution) to move scanning head 7 and also components associated with motions I and II.

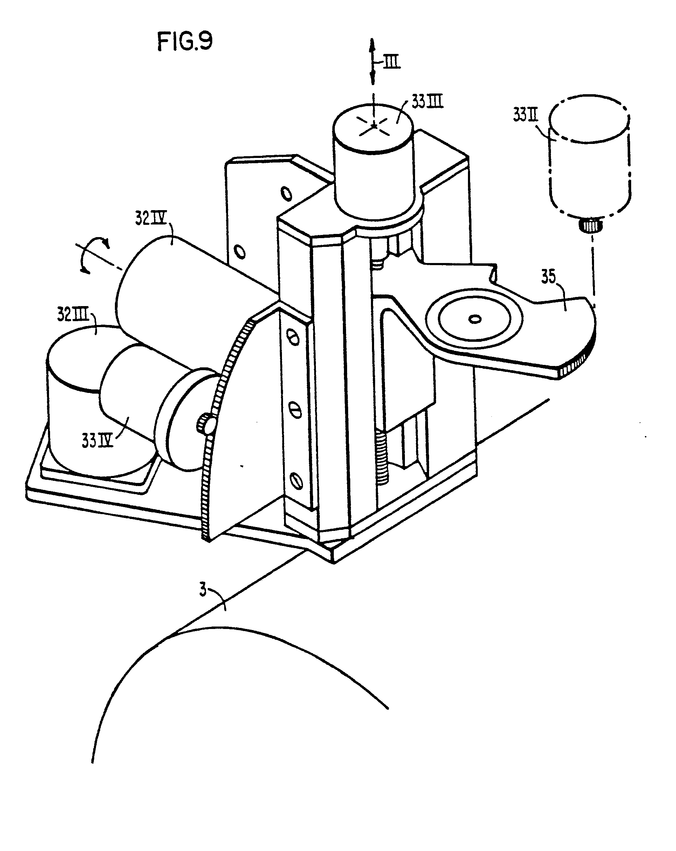

Figure 9 is a schematic of components of scanning truck 1 which are used to achieve axial plane rotation of scanning head 7, such motion identified as IV in Figures 5 and 9. Figure 9 also shows encoder feedback gear 35 which is associated with motion II.

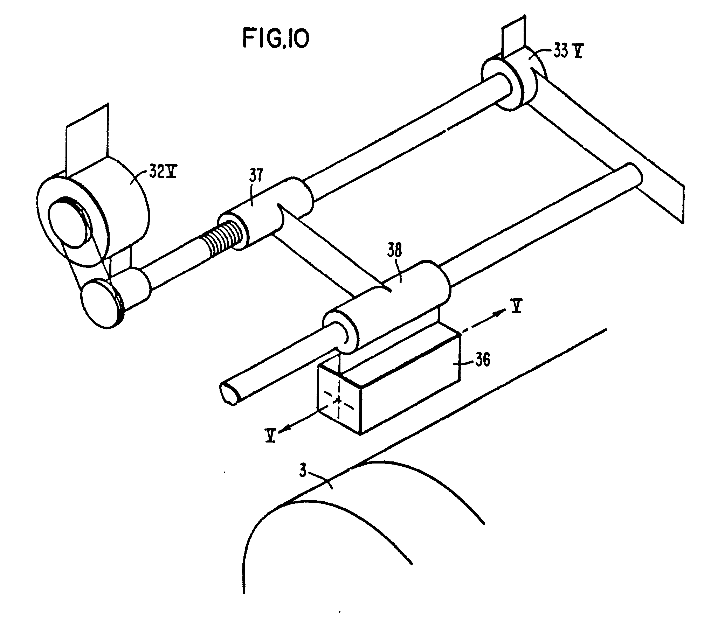

Figure 10 is a schematic of components of scanning truck 1 which are used to achieve axial travel of scanning head 7 along pipe 3 length, such motion identified as V in Figures 5 and 10. Drive motor 32 is a stepping motor which drives a ball nut 37, thereby moving a frame 36 attached to a ball bushing 38. Frame 36 bears the entirety of the components of scanner truck 1 associated with motions I to IV.

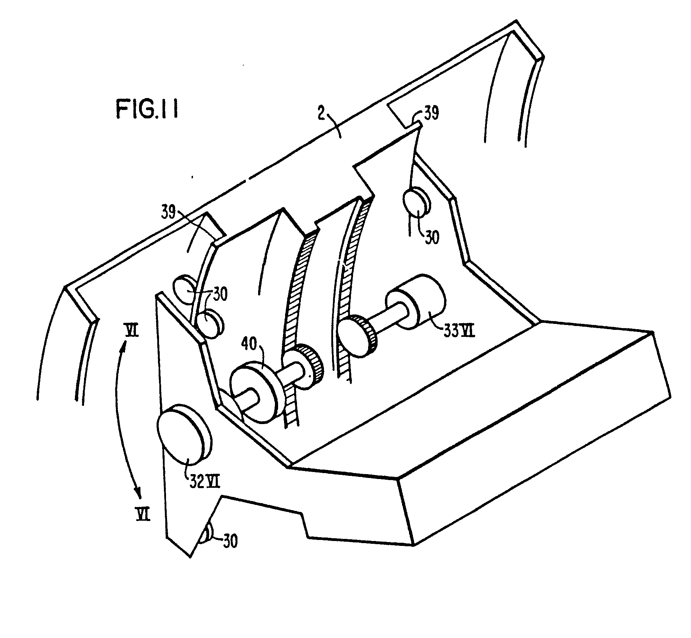

Figure 11 is a schematic of components of scanning truck 1 which are used to achieve circumferential travel of scanning truck 1 around track 2, such motion identified as VI in Figures 5 and 11. Cam rollers 30 roll on track lip 39, supporting truck 1. The motion is impelled by stepping motor 32 via positive gear action and a speed reducer 40.

A study of Figures 6 through 11, or reference to Figure 5, shows that scanning head 7 may be tilted at an angle to the pipe surface, moved to a desired standoff distance above the surface, and moved axially and circumferentially along pipe 3. The computer control system, by appropriate instructions to the driving motors and with feedback from the position encoders, can achieve a complete inspection sweep of a portion of the pipe surface, easily encompassing a weld and nearby material. Six degrees of motion freedom are necessary to achieve any arbitrary transducer orientation; in practice, fewer than 6 degrees of freedom may be adequate.

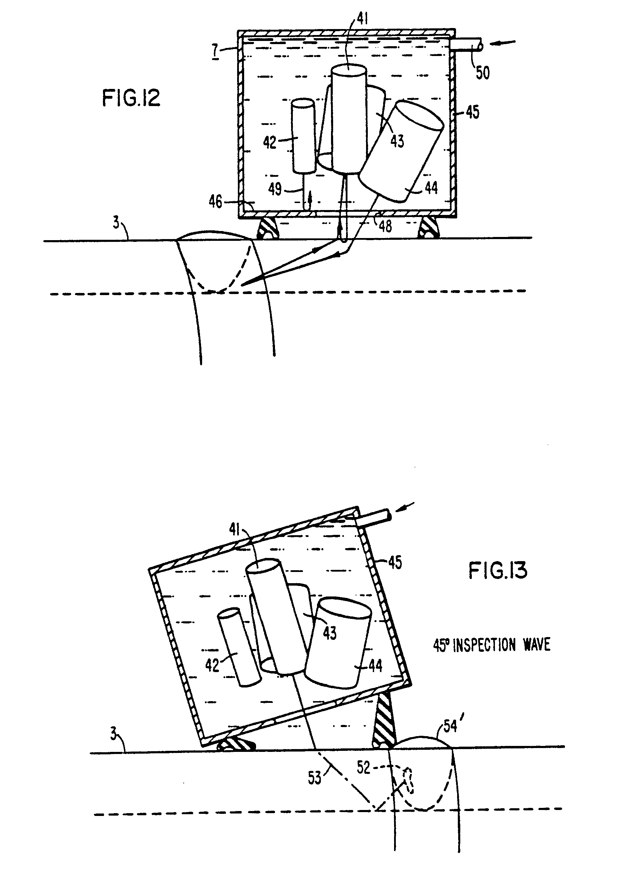

Refer to Figure 12. Scanning head 7 can be seen to contain four elements: a profiling transducer 41, a velocity sensing transducer 42, and specimen inspection transducers; a pitch-catch pair 43 and 44. Outer case 45 of scanning head 7 has an opening 48 which is disposed to allow unhindered passage of ultrasonic waves from transducers 41, 43 and 44, but not transducer 42. The ultrasonic wave from this velocity sensing TR transducer 42 reflects off reflector surface 46, as shown by sound path arrow 49 in Figure 12, and returns to TR transducer 42. This sound wave, having twice traversed a known distance through couplant, can be used to determine the acoustical velocity in the couplant using the time-of-flight of the signal. This acoustical velocity is temperature dependent, and is determined here at a site very close to the other transducer elements thereby minimizing error when the determined velocity is applied to data from the other transducers.

Scanner head 7 has a constant supply of couplant, shown entering scanning head 7 at inlet 50. The couplant flows through scanning head 7 and exits through opening 48 to fill a volume with couplant above and in contact with the pipe surface thereby providing an acoustical path for the ultrasonic waves between the pipe 3 surface and the transducers 41, 43 and 44.

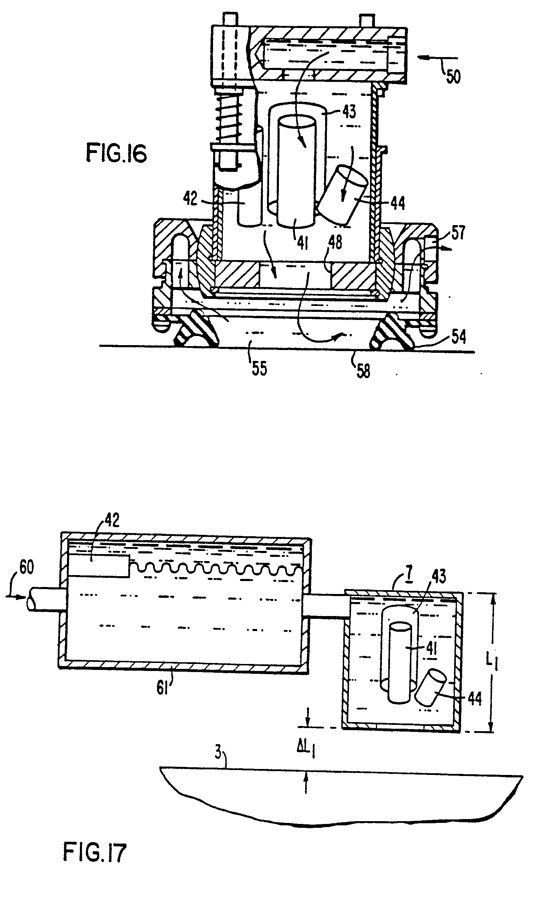

Figure 16 illustrates the containment method for the couplant volume above the specimen surface. Pressure-impelled couplant enters the scanning head at inlet 50, fills bellows volume 55, and flows out for recycle at outlet 57. Leakage past the bellows 54 and specimen surface 58 may be discarded or gathered for recycle. Bellows 54 is sufficiently pliable to be capable of achieving reasonable seals within the expected angles of operation.

It is well known in the art of ultrasonic inspection that different angles between the test signal and the specimen surface provide different defect image qualities. Various angles are therefore normally used, a 45° inspection angle being illustrated in Figure 13. Internal void 52 reflects the wave 53 backward returning to the transducer for detection of the void 52 by detection of the echo. The application represented in this drawing is inspection of a weld 54' in the pipe 3 wall. Figure 12 shows that inspection elements 43 and 44 have an angle of inclination with respect to each other. This is one possible pitch-catch configuration found effective for inspection of welds.

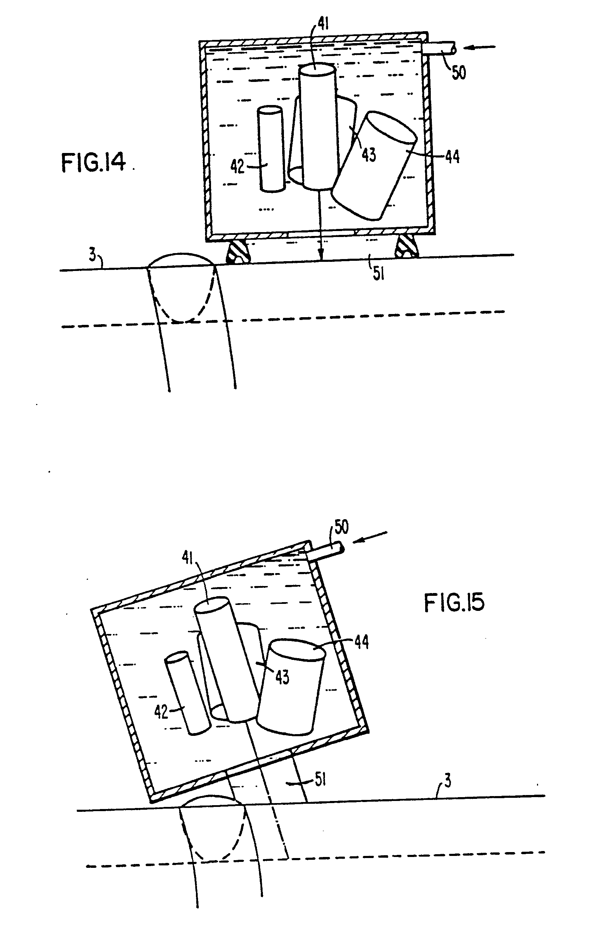

Refer to Figures 14 and 15. These drawings show use of the system to respectively accomplish outer and inner surface profiling.

Figure 14 has the couplant containment arrangement described hereinabove, but Figure 15 illustrates an alternate arrangement useful when the pipe surface geometry prevents an effective couplant seal, or surface or environmental temperatures are too high for the bellows material, or when an angle of scan is used in which the bellows does not seal. In Figure 15, a steady stream 51 of couplant flows onto the pipe surface providing an acoustical path. The couplant flow is gathered by sumps for recycle.

The goal of providing the apparatus with automatic control with sufficient precision to allow data scans to be reliably repeated is achieved by use of a computer system. The computer receives input signals from all transducers as well as all position encoders associated with all degrees of motion freedom. In application, an initial profiling scan of the specimen surface is done, perhaps prior to operation or use. There is introduced onto a surface of the specimen a geometric pattern of marks sufficiently unique and durable as to be recognizable over specimen life. For example, three indentations forming a 25 mm side equilateral triangle might be placed on the surface using a steel punch. These three points can be precisely located using the profile transducer and the points' coordinates (from the position encoders) stored by the computer. One of the three points, or a fourth point related in position to the other three (as for example, the center of the triangle) is used by the computer as a zero reference point for the definition of a computer coordinate system. As inspection and surface profiling scans are performed, either by a programmed or manually controlled sweep of scanner head 7, data from the transducers and position encoders are stored by the computer using the computer coordinate system.

In future scans, the computer can be instructed from a remote terminal to search for the reference marks which are presumed to still exist and to be immobile with respect to the specimen. Computers are well known to be capable of such pattern recognition. Upon locating the reference marks and storing their new coordinates, the old coordinates can be recalled and a coordinate transformation performed to relate the old coordinates to the new. This transformation, a routine mathematical art, can be applied to all old

**0 060 952**

coordinate data such that an inspection scan identical to the initial or earlier one can be performed. The computer can automatically control a new scanning inspection over the identical route through space while storing inspection data in associated with position encoder signals. Data received in the new scan can be compared with the data obtained previously to calculate defect propagation since the scan patterns are duplicates. Alternatively, a scan of any route can be done with data stored as received and comparison calculations nevertheless performed with appropriately paired data sets.

All transducer signals are initially echo or primary signal times-of-flight. The surface profile and inspection data are meaningful as position data for the point of reflection. The conversion of times-of-flight to geometrical position data is done by multiplication of appropriate time intervals by the acoustical velocity as continuously monitored. The resulting position data can be stored directly or transformed to the computer reference system as desired.

The acoustical velocity is also monitored during inspection after position data are obtained. The acoustical velocity is used to continuously adjust transducer position and timing information to compensate for changes in sound refraction angle and travel time occasioned by such acoustical velocity change.

From the above, it is seen that inspection repeatability and defect propagation calculations are possible due to storage of inspection data in conjunction with encoder position signals calibrated by deliberately added reference marks. As a further refinement, the computer coordinate system may be based on naturally occurring surface features recognizable by ultrasonic profiling equipment.

The computer control program for the scanning apparatus may have axial pipe profiling, circumferential pipe profiling, and specimen inspection phases. Axial pipe profiling may be used to determine the center of the weld, determine the angle between the longitudinal axis of the pipe and the axial drive (motion V in Figure 5) if any, map the radial shrinkage of the pipe adjacent to the weld, map actual pipe wall thicknesses, and determine the physical edge of the weld bead. Circumferential surface profiling is used to determine the actual circular contour of the pipe relative to scanner truck 1 to determine correction factors for later control of scanning head 7 standoff distance, and to map physical details of the weld bead edge for possible realignment of present and future data scans.

Data from surface profiling can be used to control alignment of scanning head 7 such that a specific angle of wave impingement is constant throughout the scan even though the surface contour changes.

The computer control program may be so written as to allow the operator of the system to initiate a scan by specification of a particular reflection angle, offset distance along the pipe axis from the weld edge, and scanning head 7 standoff distance. The computer will then automatically accomplish a complete circumferential scan, holding the above parameters constant using previously generated profile data and real time corrections to compensate for acoustical velocity changes.

A second embodiment has been developed in response to a problem occasionally encountered: the installed specimen is located in a cramped location such that very little room for the scanning mechanism is available. It is desired to minimize the size of scanning head 7. This has been achieved by a modification to the first embodiment in which velocity transducer 42 is not located in scanning head 7 but is rather mounted elsewhere on scanning truck 1 in close proximity to scanning head 7. Figure 17 is a schematic of the modification. In Figure 17, a couplant stream 60 enters a casing 61 which houses velocity transducer 42. The velocity within casing 61 which velocity is considered to be either identical to or of constant offset from the acoustical velocity in the vicinity of the other transducers in scanning head 7.

The size of scanning head 7 can now be smaller since scanning head 7 does not include the acoustical velocity transducer.

In practice, the difference between the acoustical velocity in casing 61 and in scanning head 7 can be determined prior to a scan and appropriate calibration factors calculated. Calibration factors so determined may be frequently checked during a scan by intermittent use of the profiling transducer or inspection transducers as a velocity transducer sensitive to the change in time-of-arrival of a signal over a small increment in stand-off distance ($\Delta L_1$). This calculation is of less accuracy than the measurement of acoustical velocities over greater distances and introduces small errors which must be accepted as a necessary penalty paid if spacial limitations are to be met.

Naturally, many variations of the scanning procedure can be used if the main computer program is so written. Preparation of appropriate computer control software programs to accomplish complete control of the system and proper storage and processing of the data is considered to be outside the present invention and within the capability of a reasonably skilled computer programmer.

Operability of the ultrasonic inspection apparatus has been verified by construction of a working model and functional testing with 205°C sodium filled piping with notch defects and deliberately added surface reference marks as well as natural weld features.

While the apparatus has been described as a weld inspection device, the novel features are obviously applicable to devices which perform tasks other than repeatedly, automatically locating defects in metal. For example, the inspection transducer in the scanning head could be replaced with a mechanical device intended to perform a special function such as a welding torch or screwdriver. Therefore, in the following claims, the word "inspection" is defined to encompass any task or act performed by the apparatus upon the specimen, the apparatus being characterized as an advanced deployment apparatus, such term "inspection" specifically including an ultrasonic search for defects.

7

# 0 060 952

The above specification and drawings are susceptible to various modifications without deviation from the true spirit and scope of the invention. For example, ultrasonic transducers of types other than piezoelectric crystals can be substituted. Therefore, this disclosure should be interpreted as illustrative rather than limiting.

## Claims

1. An automated ultrasonic inspection apparatus for the inspection of a selected region of a specimen (3) at at least two different angles, the apparatus comprising:

(A) a scanning head (7) with ultrasonic inspection elements (41—44), said scanning head (7) including a casing (45) with an opening (48);

(B) mechanical scanning support means (1) having six degrees of freedom, for supporting, aligning and positioning said scanning head (7) in proximity to the specimen; and

(C) automatic control means (26, 23) for controllably aligning and positioning said scanning head to control a specimen inspection travelling scan of the scanning head and moreover to automatically control the position and alignment of the scanning head to achieve and maintain desirable position and alignment of said scanning head with respect to said specimen characterized by:

(D) ultrasonic couplant supply means (8, 9, 50) for maintaining a supply of a fluid couplant to make contact between the specimen to be inspected and the ultrasonic element whereby said scanning head having fluid communication with said couplant supply means (8, 9, 50);

(E) the ultrasonic inspection elements also comprising a profiling ultrasonic element (41) for mapping the surface of the specimen (3) and an acoustical velocity measuring ultrasonic element (42) for measuring the velocity of sound in the couplant, the ultrasonic inspection elements (43, 44) for ultrasonic inspection of the selected region having a bellows (54) for forming a couplant filled volume (55) above a surface of the specimen, and having an outlet (48) disposed to direct a stream of couplant to the surface (58) of the specimen forming an acoustic communication path (53) between the specimen and said scanning head thereby accommodating passage of ultrasonic waves therebetween; and

(F) the automatic control means (26, 23) comprises a computer system which is programmed to control the position and alignment of the scanning head for inspection at least at two different angles in response to data obtained by previous and concurrent profiling scans and to use specimen surface features to identify a computer coordinate system and to use said coordinate system to identify and interpret inspection data, said computer also including programming to continuously interpret data received from specimen inspection scans and profiling scans using concurrently monitored couplant acoustical velocity measurements.

2. An ultrasonic inspection apparatus as defined in claim 1 wherein said mechanical scanning support means includes a circular track (2) fixed rigidly to a cylindrical pipe (3), a scanning truck (1) for supporting said scanning head (7), position encoders (33), gears and motors (32) for allowing the scanning truck six degrees of motion freedom such as to permit movement of said scanning head (7) radially outward and inward with respect to said pipe, axially along said pipe in two directions, circumferentially completely around said pipe on said track, and to permit said scanning head radial axis rotation, circular plane rotation, and axial plane rotation which three degrees of motion freedom allow alignment of the scanning head with the surface of the pipe at a desired angle.

## Patentansprüche

1. Eine automatische Ultraschall-Prüfeinrichtung zur Prüfung eines ausgewählten Bereichs einer Probe (3) unter mindestens zwei verschiedenen Winkeln, wobei in der Einrichtung enthalten sind:

a) ein Abtastkopf (7) mit Ultraschall-Prüfelementen (41—44), wobei der genannte Abtastkopf (7) ein Gehäuse (45) mit einer Öffnung (48) enthält;

b) mechanische Abtast-Trägervorrichtungen (1) mit sechs Freiheitsgraden, um den Abtastkopf (7) in der Nähe der Probe zu haltern, auszurichten und zur positionieren;

c) automatische Steuervorrichtungen (26, 23) zur gesteuerten Ausrichtung und Positionierung des Abtastkopfes, um eine Probenprüf-Abtastbewegung des Abtastkopfes zu steuern und weiter, um die Position und die Ausrichtung des Abtastkopfes zu steuern, damit eine gewünschte Position und Ausrichtung des Abtastkopfes bezüglich der Probe erzielt und aufrechterhalten wird, gekennzeichnet,

d) durch Versorgungsvorrichtungen (8, 9, 50) für Ultraschall-Kopplungsmittel zur Aufrechterhaltung einer Versorgung mit einem flüssigen Kopplungsmittel, um den Kontakt zwischen der zu prüfenden Probe und dem Ultraschall-Element herzustellen, wodurch der Abtastkopf eine Flüssigkeitsverbindung mit der Versorgungsvorrichtung (8, 9, 50) für Kopplungsmittel aufweist:

e) dadurch, daß die Ultraschall-Prüfelemente weiterhin ein Profil-Ultraschall-Element (41) zum Abbilden der Oberfläche der Probe (3) und ein Schallgeschwindigkeit-Meßelement (42) zur Messung der Schallgeschwindigkeit im Kopplungsmittel aufweisen, daß die Ultraschall-Prüfelemente (43, 44) zur Ultraschall-Prüfung des ausgewählten Bereichs einen Balg (54) aufweisen, um über der Probenoberfläche ein mit dem Kopplungsmittel gefülltes Volumen (55) auszubilden sowie einen Abfluß (48), der so angeordnet ist, daß ein Strom des Kopplungsmittels auf die Oberfläche (58) der Probe gerichtet wird, der

8

# 0 060 952

einen akustischen Verbindungspfad (53) zwischen der Probe und dem Abtastkopf ausbildet, um dazwischen den Durchgang von Ultraschallwellen zu erlauben; und

f) dadurch, daß die automatischen Steuervorrichtungen (26, 23) ein Computersystem umfassen, das so programmiert ist, daß die Position und Ausrichtung des Abtastkopfes zur Prüfung unter mindestens zwei verschiedenen Winkeln als Antwort auf Daten gesteuert wird, die von vorherigen und gleichzeitigen Profilabtastungen erhalten wurden, und um die Oberflächenmerkmale der Probe dazu zu verwenden, ein Computerkoordinatensystem zu identifizieren sowie, um das genannte Koordinatensystem dazu zu verwenden, Prüfdaten zu identifizieren und zu interpretieren, daß der Computer weiterhin Programmiermittel enthält, um laufend Daten zu interpretieren, die von den Probenprüfabtastungen und den Profil-Abtastungen erhalten wurden, wobei gleichzeitig überwachte Messungen der Schallgeschwindigkeit im Kopplungsmittel verwendet werden.

2. Eine Ultraschall-Prüfeinrichtung nach Anspruch 1, bei der die mechanischen Trägervorrichtungen enthalten:

eine kreisförmige Führung (2), die starr an einer zylindrischen Röhre (3) befestigt ist, ein Abtast-Fahrgestell (1) zur Halterung des Abtastkopfes (7), Positionskodierer (33), Getriebe und Motoren (32), um dem Abtast-Fahrgestell sechs Bewegungsfreiheitsgrade zu erlauben, so daß der Abtastkopf (7) bezüglich der Röhre radial nach außen und nach innen, achsial längs der Röhre in zwei Richtungen sowie in Umfangsrichtung längs der Führung vollständig um die Röhre bewegt werden kann, um dem Abtastkopf eine Rotation um die radiale Achse, eine Rotation in der Kreisebene und eine Rotation in der achsialen Ebene zu erlauben, wobei diese drei Freiheitsgrade die Ausrichtung des Abtastkopfes bezüglich der Oberfläche der Röhre unter einem gewünschten Winkel erlauben.

## Revendications

1. Appareil d'examen ultrasonique automatisé pour l'examen d'une zone déterminée d'un spécimen (3) sous au moins deux angles différents, l'appareil comprenant:

(A) une tête de balayage (7) munie d'éléments d'examen ultrasonique (41—44), cette tête de balayage (7) comprenant un boîtier (45) muni d'une ouverture (48),

(B) des moyens de support de balayage mécanique (1) comportant six degrés de liberté, pour supporter, aligner et positionner la tête de balayage (7) à proximité du spécimen,

(C) des moyens de commande automatiques (26, 23) pour aligner et positionner de façon contrôlable la tête de balayage de manière à commander un balayage de passage d'examen de spécimen de la tête de balayage, et à commander, en outre, automatiquement la position et l'alignement de la tête de balayage pour réaliser et maintenir une position et un alignement convenables de cette tête de balayage par rapport au spécimen, appareil caractérisé en ce qu'il comprend:

(D) des moyens d'alimentation en agent de couplage ultrasonique (8, 9, 50) destinés à maintenir une alimentation d'agent de couplage fluide pour réaliser le contact entre le spécimen à examiner et l'élément ultrasonique, de façon que la tête de balayage soit ainsi en communication de fluide avec les moyens d'alimentation en agent de couplage (8, 9, 50),

(E) les éléments d'examens ultrasoniques comprenant également un élément ultrasonique de silhouettage (41) destiné à relever la carte de surface du spécimen (3), et un élément ultrasonique de mesure de vitesse acoustique (42) destiné à mesurer la vitesse du son dans l'agent de couplage, les éléments d'examen ultrasonique (43, 44) destinés à l'examen ultrasonique de la zone déterminée, comportant un soufflet (54) destiné à former un volume rempli d'agent de couplage (55) au-dessus d'une surface du spécimen, et comportant un orifice de sortie (48) disposé de manière à diriger un débit d'agent de couplage vers la surface (58) du spécimen en formant ainsi un chemin de communication acoustique (53) entre le spécimen et la tête de balayage pour assurer ainsi le passage des ondes ultrasoniques entre les deux,

(F) des moyens de commande automatique (26, 23) comprenant un système d'ordinateur programmé de manière à commander la position et l'alignement de la tête de balayage pour effectuer un examen sous au moins deux angles différents en réponse aux données obtenues par les balayages de silhouettage précédents et simultanés, et pour utiliser les caractéristiques de surface du spécimen de manière à identifier un système de coordonnées d'ordinateur et à utiliser ce système de coordonnées pour identifier et interpréter les données d'examen, l'ordinateur comportant également une programmation destinée à interpréter en permanence les données reçues des balayages d'examen et des balayages de silhouettage du spécimen en utilisant les mesures de vitesse acoustique d'agent de couplage surveillées simultanément.

2. Appareil d'examen ultrasonique tel que défini dans la revendication 1, caractérisé en ce que les moyens de support de balayage mécanique comprennent une piste circulaire (2) fixée rigidement à un tuyau cylindrique (3), un chariot de balayage (1) destiné à supporter la tête de balayage (7), des codeurs de position (33), des engrenages et des moteurs (32) destinés à donner six degrés de liberté de mouvement au chariot de balayage de manière à permettre à la tête de balayage (7) de se déplacer radialement vers l'extérieur et vers l'intérieur par rapport au tuyau, axialement et dans deux directions le long de ce tuyau, périphériquement en entourant complètement le tuyau sur le chariot, et de manière à permettre à la tête de balayage de tourner autour d'un axe radial, de tourner dans un plan circulaire, et de tourner dans un plan axial, ces trois degrés de liberté de mouvement permettant l'alignement de la tête de balayage par rapport à la surface du tyuau sous un angle voulu.

FIG.1

FIG.2

0 060 952

FIG.3

0 060 952

FIG.4

33 II

32 II

33 III

33 VI

32 V

30

32 IV

33 IV

32 III

30

32 VI

7

33 I

32 I

FIG.5

FIG.6

FIG.7

FIG.8

FIG.9

FIG.IO

FIG.11

FIG.12

FIG.13

45° INSPECTION WAVE

FIG.14

FIG.15

0 060 952

FIG.16

FIG.17